# EUROPEAN PATENT APPLICATION

(11) **EP 4 386 933 A1**
(43) Date of publication of application: **19.06.2024**
(21) Application number: 23771752.5
(22) Date of filing: 01.02.2023
(51) Int. Cl.: H01M 10/42, H02J 7/00

(54) **MASTER-SLAVE LINKAGE CAPACITY EXPANSION METHOD AND APPARATUS FOR MOBILE BATTERY**

(30) Priority: 31.10.2022 CN 202211351174
(71) Applicant: Pylon Technologies Co., Ltd., Shanghai 201203 (CN)
(72) Inventor: ZHANG, Zuozhou, Shanghai 201203 (CN); LI, Fanjun, Shanghai 201203 (CN); SHI, Lu, Shanghai 201203 (CN); YIN, Zhibin, Shanghai 201203 (CN)
(74) Representative: Bryn Aarflot AS
(86) International application number: PCT/CN2023/074139
(87) International publication number: WO 2024/093035

(57) **Abstract**

The present disclosure provides a method and a device for master-slave cooperative capacity expansion of a mobile battery, wherein the method for master-slave cooperative capacity expansion of the mobile battery comprises determining whether the voltage of the connected external power device is in a pre-set voltage threshold range; determining, if the voltage is higher than the master voltage of the battery master, the external power device as the battery slave; turning on, if the voltage difference between the voltage and the master voltage is smaller than a pre-set voltage difference threshold, the discharge circuit between the battery slave and the battery master; and controlling the discharge circuit to discharge the battery slave based on the discharge current of the discharge circuit as well as the pre-set first and second current thresholds. The safety of parallel power supply can be improved.

## Description

### Cross-reference to Related Applications

The present disclosure claims the priority to the Chinese patent application with the filling No. 202211351174.3 filed with the Chinese Patent Office on October 31, 2022, and entitled "Method and Device for Master-Slave Cooperative Capacity Expansion of Mobile Battery", the contents of which are incorporated herein by reference in entirety.

### Technical Field

The present disclosure relates to the technical field of dynamic capacity expansion, and in particular to a method and a device for master-slave cooperative capacity expansion of the mobile battery.

### Background Art

As the demand for electricity increases in off-grid or power outage scenarios, such as indoor backup power, outdoor activities, self-driving trips, and emergency rescues, the capacity of the single portable mobile battery is often insufficient to meet the power needs. Currently, one technical solution to solve the problem is to provide two portable mobile batteries in the same model, with one portable mobile battery serving as the battery master and the other portable mobile battery serving as the battery slave. By the cooperative capacity expansion method, in which the battery master and battery slave are connected in parallel, it is possible to increase the battery capacity. However, the method of increasing battery capacity makes parallel power supply less safe and less efficient due to the fact that the battery master and battery slave, which are connected in parallel, are susceptible to short-circuit or over-voltage or over-discharge in the process of parallel power supply.

### Summary

In view of this, an object of the present disclosure is to provide a method and a device for master-slave cooperative capacity expansion of the mobile battery to improve the safety of parallel power supply as well as the efficiency of power supply.

In a first aspect, embodiments of the present disclosure provide a method for master-slave cooperative capacity expansion of mobile battery, comprising:
determining whether the voltage of the connected external power device is in a pre-set voltage threshold range;
determining, if the voltage is higher than the master voltage of the battery master, the external power device as the battery slave;
turning on, if the voltage difference between the voltage and the master voltage is smaller than a pre-set voltage difference threshold, the discharge circuit between the battery slave and the battery master; and
controlling the discharge circuit to discharge the battery slave based on the discharge current of the discharge circuit as well as the pre-set first current threshold and second current threshold.

In conjunction with the first aspect, embodiments of the present disclosure provide the first possible implementation of the first aspect, wherein the step of determining the external power device as the battery slave comprises:
sending a predefined command to the external power device, and determining whether the external power device is the battery slave based on the response from the external power device to the command.

In conjunction with the first possible implementation of the first aspect, embodiments of the present disclosure provide a second possible implementation of the first aspect, wherein the step of determining whether the external power device is the battery slave based on the response from the external power device to the command comprises:
switching, if no response to the command is received or the response does not match the pre-stored response, the power state to the external power connected state; and
determining, if the response matches the pre-stored response, the external power device as the battery slave, and configuring a protocol for communication in the battery master and the battery slave.

In conjunction with the first aspect, embodiments of the present disclosure provide a third possible implementation of the first aspect, wherein the method further comprises:
reading, if the master voltage is greater than or equal to the voltage, the master voltage and the battery slave voltage at a pre-set reading cycle of voltage until the master voltage becomes less than the voltage.

In conjunction with the first aspect, embodiments of the present disclosure provide a fourth possible implementation of the first aspect, wherein the step of controlling the discharge circuit to discharge the battery slave based on the discharge current of the discharge circuit as well as the pre-set first current threshold and second current threshold comprises:
turning off, if the discharge current is less than or equal to the first current threshold, the circuit of the battery master configured for discharging from the battery slave;
discharging, if the discharge current is greater than the first current threshold and less than the second current threshold, the battery slave by the circuit; and reading the discharge current at the pre-set reading cycle of current until the discharge current becomes less than or equal to the first current threshold, and then turning off the discharge circuit of the battery master configured for discharging from the battery slave; and
reading, if the discharge current is greater than or equal to the second current threshold, the discharge current in accordance with a pre-set reading cycle of current until the discharge current is less than the second current threshold, and turning on the circuit of the battery master configured for discharging from the battery slave.

In combination with any possible implementation of the first aspect, and the first possible implementation to the fourth possible implementation of the first aspect, embodiments of the present disclosure provide a fifth possible implementation of the first aspect, wherein the method further comprises:
discharging, if the voltage difference is greater than or equal to the voltage difference threshold, the battery slave, and reading the voltage of the battery slave in accordance with a pre-set reading cycle of voltage difference until the voltage difference is less than the voltage difference threshold.

In combination with any possible implementation of the first aspect, and the first possible implementation to the fourth possible implementation of the first aspect, embodiments of the present disclosure provide a sixth possible implementation of the first aspect, wherein the method further comprises:
switching, if it is determined that the voltage is not in the pre-set voltage threshold range, the power state of the battery master to the power abnormal state; and when the voltage exceeds the upper-limit voltage threshold of the voltage threshold range, triggering the pre-set overvoltage protection circuit.

In a second aspect, embodiments of the present disclosure further provide a device for master-slave cooperative capacity expansion of mobile battery, comprising:
an input voltage detection module, configured to determine whether the voltage of the connected external power device is in a pre-set voltage threshold range;
a voltage determination module, configured to determine whether the voltage is higher than the master voltage of the battery master;
a battery slave detection module, configured to determine the external power device as the battery slave;
a voltage difference acquisition module, configured to turn on, if the voltage difference between the voltage and the master voltage is smaller than a pre-set voltage difference threshold, the discharge circuit between the battery slave and the battery master; and
a discharge control module, configured to control the circuit to discharge the battery slave based on the discharge current of the discharge circuit as well as the pre-set first current threshold and second current threshold.

In a third aspect, embodiments of the present disclosure provide a computer device, comprising a memory, a processor, and a computer program stored on the memory and executable on the processor. The processor, when executing the computer program, implements the steps of the above-mentioned method.

In a fourth aspect, embodiments of the present disclosure provide a computer-readable storage medium, wherein the computer-readable storage medium stores a computer program. When the computer program is executed by the processor, it performs the steps of the above-mentioned method.

The embodiments of the present disclosure provide a method and a device for master-slave cooperative capacity expansion of a mobile battery. The method includes determining whether the voltage of the connected external power device is in a pre-set voltage threshold range; determining, if the voltage is higher than the master voltage of the battery master, the external power device as the battery slave; turning on, if the voltage difference between the voltage and the master voltage is smaller than a pre-set voltage difference threshold, the discharge circuit between the battery slave and the battery master; and controlling the circuit to discharge the battery slave based on the discharge current of the discharge circuit as well as the pre-set first and second current thresholds. In this way, by identifying whether the connected external power device is a battery slave or a discharger, and through voltage detection and current detection, the switching in and out of the battery slave can be realized, which can avoid short-circuit, overvoltage, or over-discharge during parallel power supply, thereby effectively improving the safety and power-supply efficiency of parallel power supply.

In order to make the above objective, features, and advantages of the present disclosure more obvious and easier to understand, the following shows preferable embodiments in combination with the drawings for detailed description as follows.

### Brief Description of Drawings

In order to more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 shows a flow schematic diagram of a method for master-slave cooperative capacity expansion of a mobile battery provided by embodiments of the present disclosure;
FIG. 2 shows a structural schematic diagram of a device for master-slave cooperative capacity expansion of a mobile battery provided by embodiments of the present disclosure; and
FIG. 3 is a structural schematic diagram of a computer device 300 provided by the embodiment of the present disclosure.

### Detailed Description of Embodiments

In order to make the objective, technical solutions, and advantages of the embodiments of the present disclosure clearer, the following will provide a clear and complete description of the technical solution in the embodiments of the present disclosure, in conjunction with the drawings in the embodiments of the present disclosure. Obviously, the described embodiments are only a part of the embodiments of the present disclosure, rather than all embodiments. The components of the embodiments of the present disclosure generally described and illustrated in the drawings herein can be arranged and designed in a variety of different configurations. Accordingly, the following detailed description of the embodiments of the present disclosure provided in the drawings is not intended to limit the scope of the claimed disclosure but merely represents selected embodiments of the present disclosure. Based on the embodiments of the present disclosure, all other embodiments obtained by those skilled in the art without creative effort shall fall within the protection scope of the present disclosure.

In the embodiment of the present disclosure, a battery management system (BMS) is built into the battery slave. Since the battery management system has a series of protection functions such as over-temperature, over-discharge, over-current, and short-circuit, it enables the battery slave to provide capacity expansion demand for the battery master and communicate with the battery master through the built-in BMS of the battery slave. The battery master can obtain the type of connected power source. Therefore, after confirming that the connected power source type is a battery slave, the battery master can control the switching-in moment and switching-out moment of the battery slave, thereby ensuring the power safety of the battery master and improving the safety and efficiency of parallel power supply.

In the embodiment of the present disclosure, by identifying whether the connected external power device is a battery slave, it not only enhances the safety of using the battery slave and battery master but also provides reliability for battery capacity expansion. Furthermore, it can effectively increase the safety of the parallel power supply and extend the lifespan of the battery master.

The embodiment of the present disclosure provides a method and device for master-slave cooperative capacity expansion of the mobile battery, as described below by way of embodiments.

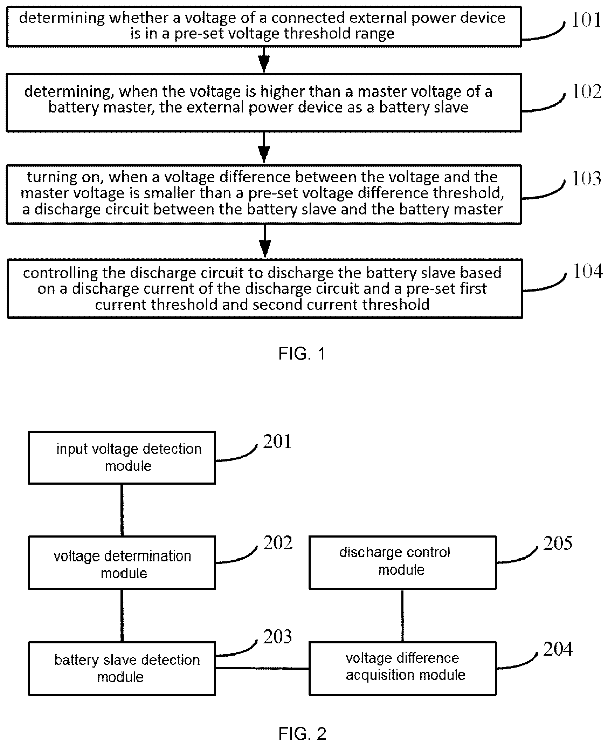

FIG. 1 shows a flow schematic diagram of a method for master-slave cooperative capacity expansion of a mobile battery provided by embodiments of the present disclosure. As shown in FIG. 1, applied to a battery master, the method comprises the following steps.

Step 101, determining whether the voltage of the connected external power device is in a pre-set voltage threshold range.

In the embodiment of the present disclosure, when an external power device, such as a discharger, external power supply, or battery slave, is connected to the battery master, in order to ensure the operation safety of the battery master, the battery master checks whether the voltage range provided by the connected external power device is in an acceptable voltage range. Therefore, by monitoring the connection of an external power device, obtaining the voltage of the connected external power device, and determining whether the voltage of the connected external power device is in a pre-set voltage threshold range, it is determined whether capacity expansion is needed.

In the embodiment of the present disclosure, as an optional embodiment, the voltage threshold range is 9V-18V. If the voltage of the connected external power device is in 9V-18V, it is determined that the voltage range of the connected external power device is valid, such that the battery master is effectively protected.

In the embodiment of the present disclosure, as an optional embodiment, after determining that the voltage is in the pre-set voltage threshold range, it is also necessary to determine whether the external power device is a battery slave or a non-battery slave. Only if it is a battery slave, the method of the embodiments of the present disclosure is adopted. Therefore, the method also comprises:
switching the power state of the battery master to an external power to-be-determined state.

In the embodiment of the present disclosure, as an optional embodiment, the power state comprises, but is not limited to, master-slave state, idle state, external power connected state, external power to-be-determined state, and power abnormal state.

In the embodiment of the present disclosure, as another optional embodiment, the method also comprises:
switching, if it is determined that the voltage is not in the pre-set voltage threshold range, the power state of the battery master to the power abnormal state; when the voltage exceeds the upper-limit voltage threshold of the voltage threshold range, triggering the pre-set overvoltage protection circuit.

In the embodiment of the present disclosure, if the voltage is not in the pre-set voltage threshold range, it enters the power abnormal state. If the voltage exceeds the upper-limit voltage threshold of the voltage threshold range, it triggers overvoltage protection to effectively protect the battery master; and if the voltage falls below the lower-limit voltage threshold of the voltage threshold range, for example, below 9V, the power state of the battery master is switched to the power abnormal state without executing any action, which means that there is no protection and no discharge prompt.

Step 102, determining, if the voltage is higher than the master voltage of the battery master, the external power device as the battery slave.

In the embodiment of the present disclosure, the master voltage of the battery master is acquired. If the master voltage of the battery master is greater than or equal to the voltage of the battery slave, the battery slave cannot discharge to the battery master. As an optional embodiment, determining that the voltage is greater than the master voltage of the battery master comprises:
reading, if the master voltage is greater than or equal to the voltage, the master voltage and the battery slave voltage at a pre-set reading cycle of voltage until the master voltage becomes less than the voltage.

In the embodiment of the present disclosure, if the voltage of the battery master is relatively high, during the process of supplying power externally, the voltage will gradually decrease. Therefore, voltage detection is performed based on the reading cycle of voltage. As an optional embodiment, the reading cycle of voltage can be set according to the actual needs, for example, it can be set to 3 minutes, 5 minutes, and so on.

In the embodiment of the present disclosure, as an optional embodiment, determining whether the external power device is a battery slave comprises:
sending a predefined command to the external power device, and determining whether the external power device is the battery slave based on the response from the external power device to the command.

In the embodiment of the present disclosure, after determining that the input voltage from the external power device is valid, it is necessary to determine whether the connected external power device is a battery slave. If the external power device is a battery slave, the method in the embodiment of the present disclosure is applied. However, if the external power device is not a battery slave, for example, it is a discharger, it is not within the scope of the embodiment of the present disclosure. As an optional embodiment, the battery master sends commands through an interface with rs485 communication pin.

In the embodiment of the present disclosure, as an optional embodiment, the step of determining whether the external power device is the battery slave based on the response from the external power device to the command comprises:
the battery master sending the command to the external power device;
switching, if there is no response to the command or the response does not match the pre-stored response, the power state to the external power connected state; and
determining, if the response matches the pre-stored response, the external power device as the battery slave, and configuring a protocol for communication in the battery master and the battery slave.

In the embodiment of the present disclosure, a protocol and communication mechanism for communication between batteries are pre-set in the battery. As a result, if the external power device connected to the battery master is a battery slave, the battery slave can respond correctly to the received command.

In the embodiment of the present disclosure, after determining that the connected external power device is a battery slave, the power state is switched from the external power to-be-determined state to the master-slave state.

Step 103, turning on, if the voltage difference between the voltage and the master voltage is smaller than a pre-set voltage difference threshold, the discharge circuit between the battery slave and the battery master.

In the embodiment of the present disclosure, if the voltage difference is less than a voltage difference threshold, a discharge circuit of the battery master for discharging from the battery slave is turned on.

In the embodiment of the present disclosure, as an optional embodiment, the method further comprises:
discharging, if the voltage difference is greater than or equal to the voltage difference threshold, the battery slave, and reading the voltage of the battery slave in accordance with a pre-set reading cycle of voltage difference until the voltage difference is less than the voltage difference threshold.

In the embodiment of the present disclosure, a discharge circuit of the battery master for discharging from the battery slave is turned off in the case where the voltage difference is greater than or equal to the voltage difference threshold.

Step 104, controlling the discharge circuit to discharge the battery slave based on the discharge current of the discharge circuit as well as the pre-set first and second current thresholds.

In the embodiment of the present disclosure, a discharge current of the discharge circuit is obtained. As an optional embodiment, the step of controlling the circuit to discharge the battery slave based on the discharge current as well as the pre-set first and second current thresholds comprises:
turning off, if the discharge current is less than or equal to the first current threshold, the circuit of the battery master used for discharging from the battery slave;
discharging, if the discharge current is greater than the first current threshold and less than the second current threshold, the battery slave by the circuit; and reading the discharge current at the pre-set reading cycle of current until the discharge current becomes less than or equal to the first current threshold, and then turning off the discharge circuit of battery master for discharging from the battery slave; and
reading, if the discharge current is greater than or equal to the second current threshold, the discharge current in accordance with a pre-set reading cycle of current until the discharge current is less than the second current threshold, and turning on the circuit of the battery master for discharging from the battery slave.

In the embodiment of the present disclosure, after turning on the circuit of the battery master for discharging from the battery slave, the discharge current is measured. If the discharge current is greater than or equal to the second current threshold, the discharge circuit of the battery master for discharging from the battery slave is turned off. After a pre-set reading cycle of current, the discharge circuit of the battery master for discharging from the battery slave is turned on, and the discharge current is read again. This process is repeated until the discharge current becomes less than the second current threshold, thereby allowing normal discharge of the battery slave. Alternatively, after turning on the circuit of the battery master for discharging from the battery slave for a pre-set number of times, for example, 5 times, if the discharge current still remains greater than or equal to the second current threshold, after the discharge circuit of the battery master for discharging from the battery slave is turned off, the power state of the master is switched to the power abnormal state.

In the embodiment of the present disclosure, as an optional embodiment, the voltage difference threshold is 0.3 volts, the reading cycle of the voltage difference is 30 seconds, the reading cycle of the current is 30 seconds, the first current threshold is 0.5 amps, and the second current threshold is 50 amps.

In the embodiment of the present disclosure, the battery master and the battery slave are connected through a cascade line, with the battery master located above the battery slave. After a successful cascade connection, the power state of the battery master enters the master-slave state.

A specific embodiment is described in detail below.

In the embodiment of the present disclosure, when the voltage of the battery master is higher than the voltage of the connected battery slave, the battery master sends commands through an interface with rs485 communication pin. If there is no response returned or the returned response is incorrect, it enters the external power connected state. If the returned response is correct, it enters the master-slave state, and the battery master reads the battery slave voltage every 30 seconds until the master voltage becomes lower than the slave voltage.

When the voltage of the battery master is lower than the voltage of the connected power source, the battery master sends commands through an interface with rs485 communication pin. If there is no response returned or the returned response is incorrect, it enters the external power connected state. If the returned response is correct, it enters the master-slave state, and then the voltage difference between the battery master and the battery slave is determined. When the battery slave voltage is higher than the battery master voltage and the voltage difference exceeds 0.3 V, the battery master turns on the front-end mos, discharges the battery slave, turns off the charging mos, and reads the battery slave voltage at 30-second intervals until the voltage difference becomes less than 0.3 V.

When the battery slave voltage is higher than the master voltage and the voltage difference is less than 0.3 V, the battery master turns on both the charging mos and the discharging mos. At this point, the battery master determines the discharge current. When the discharge current is ≤ 0.5 A, the battery slave is unable to perform the charging function, and the battery master controls the battery slave to turn off the front-end mos. When the charging current is >0.5 A and the current is <50 A, the charging mos is turned on and the current is confirmed by every 30 seconds until the current becomes <0.5 A. When the current is >50 A, the battery master activates a timer. If the current becomes <50 A after 15 s, the battery master turns on the charging mos. If the current remains >50 A, the battery master switches to the power abnormal state.

In the embodiment of the present disclosure, each time an external power device is connected, commands are sent via the communication interface on the pin of the battery master, thereby allowing accurate identification of whether the connected external power device is a battery slave or a charger. Through voltage detection and current detection, the battery slave can be switched in and out, thereby ensuring the safety of cascade connection. This approach prevents short-circuit, overvoltage, and over-discharge during parallel power supply, thereby effectively enhancing the safety of parallel power supply and ensuring power supply efficiency. Furthermore, in the embodiment of the present disclosure, the battery slave can be used as a standalone device with alarm and protection system, thereby ensuring even more reliable safety. Therefore, the battery slave can be used in more usage scenarios.

FIG. 2 shows a structural schematic view of a device for master-slave cooperative capacity expansion of a mobile battery provided by embodiments of the present disclosure. As shown in FIG. 2, the device comprises:
an input voltage detection module 201, configured to determine whether the voltage of the connected external power device is in a pre-set voltage threshold range, wherein
in the embodiment of the present disclosure, the input voltage detection module 201 is configured to monitor the connection of external power device, acquire the voltage of the connected external power device; as an optional embodiment, the input voltage detection module 201 is further configured to
switch, if it is determined that the voltage is not in the pre-set voltage threshold range, the power state of the battery master to the power abnormal state; and when the voltage exceeds the upper-limit voltage threshold of the voltage threshold range, trigger the pre-set overvoltage protection circuit;
a voltage determination module 202, configured to determine whether the voltage is greater than the master voltage of the battery master, and notify the battery slave detection module 203, wherein
in the embodiment of the present disclosure, the voltage determination module 202 is configured to obtain the master voltage of the battery master and determine whether the voltage is greater than the master voltage; as an optional embodiment, the voltage determination module 202 is specifically configured to
read, if the master voltage is greater than or equal to the voltage, the master voltage and the battery slave voltage at a pre-set reading cycle of voltage until the master voltage becomes less than the voltage; and
a battery slave detection module 203, configured to determine whether the external power device is a battery slave, wherein
in the embodiment of the present disclosure, the battery slave detection module 203 sends a predefined command to the external power device, and determines whether the external power device is the battery slave based on the response from the external power device to the command; as an optional embodiment, the battery slave detection module 203 comprises
a command sending unit (not shown in the figure), configured for the battery master to send commands to the external power device;
a first matching unit, configured to switch, if there is no response to the command or the response does not match the pre-stored response, the power state to the external power connected state; and
a second matching unit, configured to determine, if the response matches the pre-stored response, the external power device as the battery slave, wherein a protocol for communication is provided in the battery master and the battery slave;
a voltage difference acquisition module 204, configured to turn on, if the voltage difference between the voltage and the master voltage is smaller than a pre-set voltage difference threshold, the discharge circuit between the battery slave and the battery master, wherein
in the embodiment of the present disclosure, the voltage difference acquisition module 204 calculates a voltage difference between the voltage and the master voltage; as an optional embodiment, the voltage difference acquisition module 204 is further configured to
discharge, if the voltage difference is greater than or equal to the voltage difference threshold, the battery slave, and read the voltage of the battery slave in accordance with a pre-set reading cycle of voltage difference until the voltage difference is less than the voltage difference threshold; and
a discharge control module 205, configured to control the discharge circuit to discharge the battery slave based on the discharge current of the discharge circuit as well as the pre-set first and second current thresholds, wherein
in the embodiment of the present disclosure, the discharge control module 205 obtains the discharge current of the circuit, and based on the discharge current, the first current threshold, and the second current threshold, controls the discharge circuit to discharge the battery slave. As an optional embodiment, the voltage difference threshold is 0.3 volts, the reading cycle of voltage difference is 30 seconds, the reading cycle of the current is 30 seconds, the first current threshold is 0.5 amps, and the second current threshold is 50 amps.

In the embodiment of the present disclosure, as an optional embodiment, the discharge control module 205 comprises
a first threshold determination unit (not shown in the figure), configured to turn off, if the discharge current is less than or equal to the first current threshold, the circuit of the battery master used for discharging from the battery slave;
a second threshold determination unit, configured to discharge the battery slave by the circuit, if the discharge current is greater than the first current threshold and less than the second current threshold; and read the discharge current at the pre-set reading cycle of current until the discharge current becomes less than or equal to the first current threshold, and then turn off the circuit of battery master for discharging from the battery slave; and
a third threshold determination unit, configured to read, if the discharge current is greater than or equal to the second current threshold, the discharge current in accordance with a pre-set read cycle of current until the discharge current is less than the second current threshold; and turn on the discharge circuit of the battery master for discharging from the battery slave.

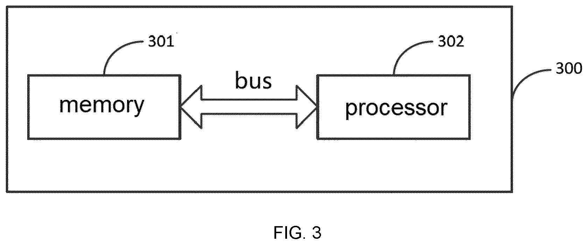

As shown in FIG. 3, an embodiment of the present disclosure provides a computer device 300 for executing the method for master-slave cooperative capacity expansion of mobile battery described in FIG. 1. The device comprises a memory 301, a processor 302 connected to the memory 301 via a bus, and a computer program stored in the memory 301 and executable on the processor 302. The aforementioned processor 302, when executing the aforementioned computer program, implements the steps of the method for the master-slave cooperative capacity expansion of the mobile battery described above.

Specifically, the above mentioned memory 301 and processor 302 can be general-purpose memory and processor. No specific limitations are made herein. When the processor 302 runs the computer program stored in the memory 301, it can execute the method for master-slave cooperative capacity expansion of the mobile battery described above.

Corresponding to the method for master-slave cooperative capacity expansion of the mobile battery described in FIG. 1, the embodiment of the present disclosure also provides a computer-readable storage medium, wherein the computer-readable storage medium stores a computer program. The computer program, when executed by a processor, performs the steps of the method for the master-slave cooperative capacity expansion of the mobile battery described above.

Specifically, the storage medium can be a general-purpose storage medium, such as a removable disk, hard drive, etc. When the computer program stored on the storage medium is executed, it can perform the method for master-slave cooperative capacity expansion of the mobile battery described above.

In the embodiments provided in the present disclosure, it should be understood that the systems and methods disclosed can be implemented in other ways. The above-described embodiments of the systems are merely schematic, for example, the division of the units described, which is only a logical functional division, can be divided in another way when actually implemented; for another example, multiple units or components can be combined or can be integrated into another system, or some features can be ignored, or not implemented. On another point, the mutual coupling or direct coupling or communication connection shown or discussed herein can be an indirect coupling or communication connection through some communication interfaces, systems, or units, which can be electrical, mechanical, or in other forms.

The units illustrated as separate components can/cannot be physically separated, and the components displayed as units can/cannot be physical units, that is, they can be located in one place or distributed to a plurality of network units. Some or all of these units can be selected according to actual needs to achieve the objective of the embodiment solution.

In addition, each functional unit in the embodiments of the present disclosure can be integrated into a single processing unit, each unit can be physically present separately, or two or more units can be integrated into a single unit.

When the functions are realized in the form of software function units and sold or used as independent products, they can be stored in a computer-readable storage medium. Based on such understanding, the essentials of the technical solution of the present disclosure or the part that contributes to the prior art or the part of the technical solution can be embodied in the form of a software product, wherein the computer software product is stored in a storage medium, including several instructions used to make a computer device (which can be a personal computer, a server, or a network device, etc.) execute all or part of the steps of the methods described in each embodiment of the present disclosure. The aforementioned storage media include a USB flash drive, mobile hard disk, read-only memory (ROM), random access memory (RAM), disk or CD, and other media that can store program code.

It should be noted that similar numerals and letters denote similar terms in the following drawings, so that once an item is defined in one drawing, it does not need to be further defined or discussed in subsequent drawings. Furthermore, terms "first", "second", "third", etc., are used for differentiation in description only and should not be construed as indicating or implying relative importance.

Finally, it should be noted that the above-described embodiments are only specific implementations of the present disclosure, they are used to illustrate the technical solutions of the present disclosure rather than limiting it, and the scope of protection of the present disclosure is not limited thereto. Although the present disclosure has been detailed referring to the aforementioned embodiment, those of ordinary skill in the art should understand that any person of ordinary skill in the art can still modify the technical solutions described in the foregoing embodiments or easily think of changes within the technical scope disclosed in the present disclosure, or equivalent replacements can be made to some of the technical features; and these modifications, changes or replacements do not make the essence of the corresponding technical solutions deviate from the spirit and scope of the technical solutions of the embodiments of the present disclosure, and should be covered within the scope of protection of the present disclosure. Therefore, the protection scope of the present disclosure should be based on the protection scope of the claims.

## Claims

1. A method for master-slave cooperative capacity expansion of a mobile battery, **characterized by** comprising:
determining whether a voltage of a connected external power device is in a pre-set voltage threshold range;
determining, when the voltage is higher than a master voltage of a battery master, the external power device as a battery slave;
turning on, when a voltage difference between the voltage and the master voltage is smaller than a pre-set voltage difference threshold, a discharge circuit between the battery slave and the battery master; and
controlling the discharge circuit to discharge the battery slave based on a discharge current of the discharge circuit and a pre-set first current threshold and second current threshold.

2. The method according to claim 1, wherein the step of determining whether the external power device is the battery slave comprises:
sending a predefined command to the external power device, and determining whether the external power device is the battery slave based on a response from the external power device to the command.

3. The method according to claim 2, wherein the step of determining whether the external power device is the battery slave based on a response from the external power device to the command comprises:
switching, when no response to the command is received or the response does not match a pre-stored response, a power state to an external power connected state; and
determining, when the response matches the pre-stored response, the external power device as the battery slave, and configuring a protocol for communication in the battery master and the battery slave.

4. The method according to claim 1, wherein the method further comprises:
reading, when the master voltage is greater than or equal to the voltage, the master voltage and a battery slave voltage at a pre-set reading cycle of voltage until the master voltage becomes less than the voltage.

5. The method according to claim 1, wherein the step of controlling the discharge circuit to discharge the battery slave based on a discharge current of the discharge circuit and a pre-set first current threshold and second current threshold:
turning off, when the discharge current is less than or equal to the first current threshold, the discharge circuit of the battery master configured for discharging from the battery slave;
discharging, when the discharge current is greater than the first current threshold and less than the second current threshold, the battery slave by the circuit; and reading the discharge current at a pre-set reading cycle of current until the discharge current becomes less than or equal to the first current threshold, and then turning off the circuit of the battery master configured for discharging from the battery slave; and
reading, when the discharge current is greater than or equal to the second current threshold, the discharge current in accordance with the pre-set reading cycle of current until the discharge current is less than the second current threshold, and turning on the discharge circuit of the battery master configured for discharging from the battery slave.

6. The method according to any one of claims 1 to 5, wherein the method further comprises:
discharging, when the voltage difference is greater than or equal to the voltage difference threshold, the battery slave, and reading a voltage of the battery slave in accordance with a pre-set reading cycle of voltage difference until the voltage difference is less than the voltage difference threshold.

7. The method according to any one of claims 1 to 5, wherein the method further comprises:
switching, when it is determined that the voltage is not in the pre-set voltage threshold range, a power state of the battery master to a power abnormal state; and when the voltage exceeds an upper-limit voltage threshold of the voltage threshold range, triggering a pre-set overvoltage protection circuit.

8. A device for master-slave cooperative capacity expansion of a mobile battery, **characterized by** comprising:
an input voltage detection module, configured to determine whether a voltage of a connected external power device is in a pre-set voltage threshold range;
a voltage determination module, configured to determine whether the voltage is higher than a master voltage of a battery master, and notify a battery slave detection module;
the battery slave detection module, configured to determine whether the external power device is a battery slave;
a voltage difference acquisition module, configured to turn on, when a voltage difference between the voltage and the master voltage is smaller than a pre-set voltage difference threshold, a discharge circuit between the battery slave and the battery master; and
a discharge control module, configured to control the discharge circuit to discharge the battery slave based on a discharge current of the discharge circuit and a pre-set first current threshold and second current threshold.

9. A computer device, **characterized by** comprising a processor, a memory, and a bus, wherein the memory stores machine-readable instructions that can be executed by the processor, when the computer device is running, the processor communicates with the memory through the bus, and the machine-readable instructions, when executed by the processor, perform the steps of the method for master-slave cooperative capacity expansion of the mobile battery according to any one of claims 1 to 7.

10. A computer-readable storage medium, **characterized in that** the computer-readable storage medium stores a computer program; and the computer program, when executed by a processor, performs the steps of the method for master-slave cooperative capacity expansion of the mobile battery according to any one of claims 1 to 7.
